# EUROPEAN PATENT APPLICATION

(11) **EP 2 974 905 A1**
(43) Date of publication of application: **20.01.2016**
(21) Application number: 15172397.0
(22) Date of filing: 16.06.2015
(51) Int. Cl.: B60P 1/02, B60P 3/40

(54) **METHOD AND ASSEMBLY FOR TRANSPORT OF HEAVY LOADS**

(30) Priority: 15.07.2014 NL 2013187
(71) Applicant: Mammoet Engineering B.V., 3115 JD Schiedam (NL)
(72) Inventor: Helmens, Wessel, 3355 BK Papendrecht (NL); Lambooij, Thomas Oscar, 4131 CD Vianen (NL)
(74) Representative: Van Breda, Jacobus

(57) **Abstract**

Method and assembly for transport of heavy loads (2,2'), using two adjacent series of platforms (9,10), wherein each series of platforms (3,4,5,6) has wheels and inter-positioned connecting units provided with sideways extending releasable and connectable links, wherein a first series of platforms is positioned at a first side of the heavy load and the second series of platforms is positioned at a second side of the heavy load opposite to said first side, whereafter each couple of two connecting units that are next to each other and are part of different ones of the two series of platforms (9,10), are connected to each other by connecting their respective sideways extending releasable and connectable links underneath the load.

## Description

The invention relates to a method and an assembly for transport of heavy loads, using a series of platforms provided with wheels, and at least one inter-positioned connecting unit for connecting the platforms in the series of platforms with each other. The invention is also embodied in the said inter-positioned connecting unit for connecting platforms to each other.

Such a series of platforms that is provided with wheels and interpositioned connecting units for connecting the platforms with each other is known and used in practice.

US2009/0280000 discloses a trailer combination designed for handling a very high tonnage of heavy equipment. The trailer combination includes a hauling vehicle for a low-boy trailer and a hauling vehicle of an auxiliary trailer, with a spacing bar assembly mounted to one of the vehicles to link the vehicles together when hauling the trailer and the auxiliary trailer.

One of the problems with transport of heavy loads is that the load first has to be lifted and elevated in order to be placed on the series of platforms for transport. Likewise at the destination lifting equipment is necessary to take the transported heavy loads from the platforms. At both instances this requires additional lifting equipment which makes the transport of such heavy loads cumbersome, costly and time-consuming.

The invention is aimed at providing a method and an assembly of movable platforms and interposed connecting units connecting said movable platforms for transport of heavy loads, wherein the need to use additional lifting equipment at both the origin and the destination of the heavy load is obviated.

For this purpose a method and an assembly of movable platforms and interposed connecting units are proposed in accordance with one or more of the appended claims.

In a first aspect of the invention there are two adjacent series of platforms, each platform having wheels and each series of platforms having inter-positioned connecting units between the platforms, wherein each couple of two connecting units that are neighboring to each other and are part of different ones of the two adjacent series of platforms, are provided with sideways extending releasable and connectable links for connecting these connecting units to each other. These releasable and connectable links are preferably complementary shaped.

Accordingly a method for transport of heavy loads is proposed in which the said two adjacent series of platforms are employed, wherein a first series of platforms is positioned at a first side of the heavy load and a second series of platforms is positioned at a second side of the heavy load opposite to said first side, whereafter each couple of two connecting units that are next to each other but are part of different ones of the two series of platforms, are connected to each other by connecting their respective sideways extending releasable and connectable links underneath the load.

Preferably the releasable and connectable links comprise a left saddle portion and a right saddle portion that are arranged to be assembled together so as to provide a complete saddle capable to support at least part of a load, wherein the left saddle portion is part of the connectable link of a connecting unit of a first series of platforms and the right saddle portion is part of the connectable link of a connecting unit of a second series of platforms adjacent to said first series of platforms. Accordingly in the method of the invention this makes the preferable arrangement possible that said left saddle portion and right saddle portion are joined so as to provide a complete saddle for support of at least part of the load.

In another aspect of the invention that can be applied independent and separate from any of the other features of the invention, each connecting unit comprises a frame that is provided with a spine beam that at its opposite ends is connectable to a leading platform and a trailing platform with reference to said frame. Particularly when the assembly is used for transport of very heavy loads the feature of the spine beam arranges that longitudinal forces in the series of platforms can be transferred effectively throughout the assem-bly without adversely effecting the strength and maintenance of the connection between the platforms.

One further feature of the invention is that each sideways extending releasable and connectable link of a connecting unit is preferably connected or connectable with a frame of said connecting unit that is positioned between a leading platform and a trailing platform with reference to said frame. Advantageously the releasable and connectable links are connected with the frames of the connecting units through predominantly triangular subframes, each such subframe having its base connected to a frame of a connecting unit and its top angle connected to a saddle portion of the concerning connectable link. This secures sufficient structural rigidity of the connectable links with reference to the base connecting units which is an important aspect for safe transport of the heavy loads.

In another favorable embodiment each connecting unit supports a telescopically extendable arm which, at a position remote from and displaceable with reference to the connecting unit, is connected through flexible pulling means, such as a cable or strap, with the releasable and connectable link of said connecting unit. The application of flexible pulling means, such as a cable or strap, is very favorable since it can easily accommodate to the shape of the heavy load that is to be transported when, after completing the saddle for support of at least part of the load, the telescopic arms of the connecting units in the first and second series of platforms are extended to lift the load.

Desirably the position of the telescopically extendable arm remote from and displaceable with reference to the connecting unit is arranged to rest during use against the load so as to provide equilibrium of forces between the assembly of platforms and the load which is being lifted.

In yet another aspect of the invention the telescopically extendable arm is mounted on a shoe that is slidably received in a slide of the connecting unit. Due to this feature the telescopic arms are arranged to slide in the direction of the center of their connecting units during extension of said telescopic arms for lifting the load. Accordingly the stability of the first and second series of movable platforms and connecting units on both sides of the heavy load is secured at the time the heavy load is lifted from the ground.

The invention will hereinafter be further elucidated with reference to the drawing of an exemplary embodiment of an assembly and method for transporting a heavy load according to the invention. The following embodiment is not limiting as to the appended claims.

In the drawing:
- figure 1 shows a single series of platforms that can form part of an assembly according to the invention;
- figure 2 shows in frontal view an assembly according to the invention with a heavy load;
- figure 3 shows the assembly and heavy load of figure 2 in an isometric view; and
- figure 4 shows a single connection unit as used in a series of platforms of an assembly according to the invention.

Whenever in the figures the same reference numerals are applied, these numerals refer to the same parts.

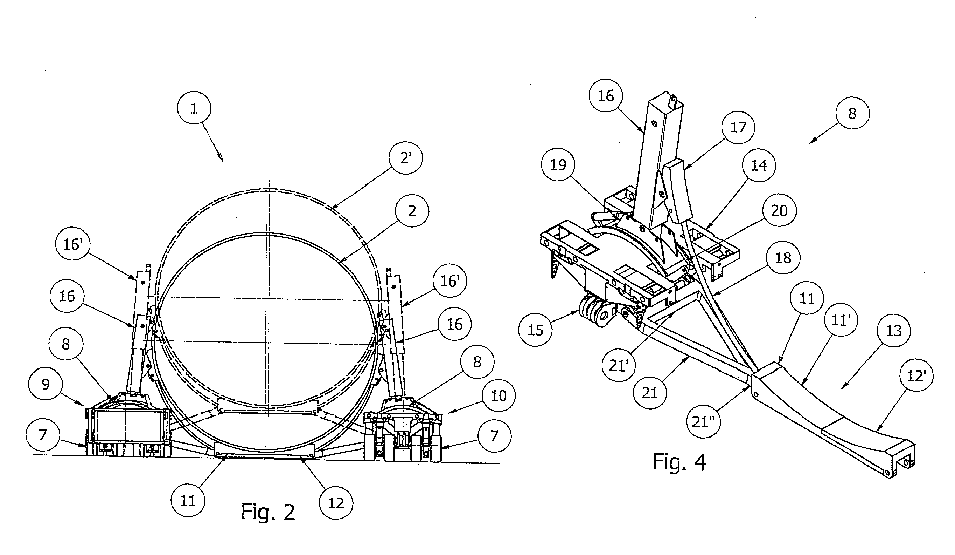

In figure 2 a frontal view is offered of an assembly 1 for transport of a heavy load 2. Figure 2 shows the heavy load 2 in full lines before being lifted from the ground by the assembly of platforms according to the invention as will be explained hereinafter. The heavy load 2' is also shown in dashed lines after it has been lifted from the ground.

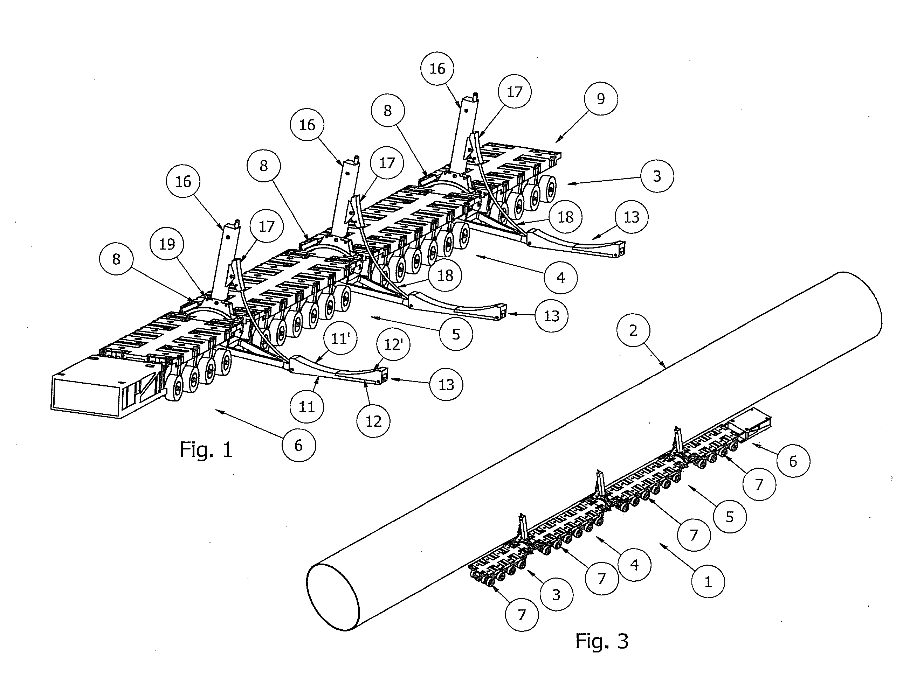

As is more clear from figure 1 and figure 3 each assembly 1 for transport of a heavy load 2 comprises a series of platforms 3, 4, 5, 6 provided with wheels 7, and inter-positioned connecting units 8 for connecting the platforms 3, 4, 5, 6 with each other. One connecting unit 8 for connecting trailing platforms is shown separately in figure 4.

Figure 2 shows that there are two adjacent series 9, 10 of platforms on either side of the heavy load 2, 2'. Each platform 3, 4, 5, 6 has wheels 7 and the platforms are provided with inter-positioned connecting units 8. It will be clear that the number of platforms in each series 9, 10 can be attuned to the dimensions of the load, in particular its length. As best shown with reference to figure 2 each couple of two connecting units 8 that are neighboring to each other (one such couple being recognizable in figure 2) and that are part of different ones of the two adjacent series 9, 10 of platforms, are provided with sideways extending releasable and connectable links 11, 12 that are employed to connect these neighboring connecting units 8 to each other.

The connectable links 11, 12 of the neighboring connecting units 8 are preferably complementary shaped. For clarity purposes reference is now made to both figure 2 and figure 4 to show that the releasable and connectable links 11, 12 comprise a left saddle portion 11' and a right saddle portion 12' that are arranged to cooperate with each other so as to provide a complete saddle 13. As will be clear from figure 1 any single saddle 13 made from a left saddle portion 11' and right saddle portion 12' is equipped to support at least part of a load. All saddles 13 together are designed to be capable to support the entire load 2. It will further be clear from the information of figure 1 and figure 2 in combination that the left saddle portion 11' is part of the connecting link 11 of a connecting unit 8 of a first series 9 of platforms to be positioned at a first side of the load 2 which is to be transported, and that the right saddle portion 12' is part of the connecting link 12 of a connecting unit of a second series of platforms (indicated with reference 10 in figure 2) which is adjacent to said first series 9 of platforms but on the other side of the load 2, so that the load 2 is in between the first and the second series 9, 10 of platforms.

Making now reference to figure 4 showing a single connecting unit 8, it is further shown that this connecting unit 8 comprises a frame 14 that is provided with a spine beam 15 which is not recognizable from the figure but which extends entirely through the frame 14, and which at its opposite ends is connectable to a leading platform and a trailing platform with reference to said frame 14. This will be clear for the skilled person without further elucidation based on the information provided by said figure 4 in combination with figure 1 and figure 3 relating to the series of platforms 3, 4, 5, 6 mutually connected by means of the interposed connecting units 8.

Figure 4 shows that the sideways extending releasable and connectable link 11 of a connecting unit 8 is connected or connectable with the frame 14 of said connecting unit 8 which is to be positioned between a leading platform and a trailing platform with reference to said frame 14. This connection is made through a predominantly triangular subframe 21, wherein this subframe 21 has its base 21' connected to said frame 14 of the connecting unit 8 and its top angle 21" connected to a saddle portion 11' of said connectable link 11.

Figure 4 further shows that the connecting unit 8 supports a telescopically extendable arm 16 which at a position 17 remote from and displaceable with reference to the connecting unit 8 is connected through flexible pulling means 18, such as a cable or strap, with the releasable and connectable link 11 of said connecting unit 8. This feature is also shown in figure 1. Making further reference to figure 4, the telescopically extendable arm 16 is shown to be mounted on a shoe 19 that is slidably received in a slide 20 of the connecting unit 8.

Operation of the assembly 1 according to the invention occurs substantially as follows, wherein reference is first made to figure 2 and figure 1 and 3.

Making use of two adjacent series 9, 10 of platforms 3, 4, 5, 6, as shown in figure 2, wherein each series 9, 10 of platforms has wheels 7 and inter-positioned connecting units 8 provided with sideways extending releasable and connectable links 11, 12, operation starts by having a first series 9 of platforms positioned at a first side of the heavy load 2 resting on the ground and having the second series 10 of platforms positioned at a second side of the heavy load 2 opposite to said first side. When the couples of connecting units 8 that are part of different ones of the said two series 9, 10 of platforms, are next to each other with the heavy load 2 in between them, they are connected to each other by connecting their respective sideways extending releasable and connectable links 11, 12 underneath the load 2. For this purpose each time a left saddle portion 11' forming part of a connecting link 11 of a connecting unit 8 of a first series 9 of platforms, and a right saddle portion 12' forming part of a connecting link 12 of a connecting unit 8 of a second series 10 of platforms adjacent to said first series 9 of platforms, are joined so as to provide a complete saddle 13 for support of at least part of the load 2. This can be best understood with reference to figure 1 in which the heavy load and one of the series of platforms is not shown except for the latter's right saddle portions 12'. Once the complete saddles 13 are provided by assembling the left saddle portions 11' and right saddle portions 12' together, the operation continues by energizing the telescopically extendable arms 16 mounted on the connecting units 8. As mentioned above, each connecting unit 8 is provided with such a telescopically extendable arm 16 which, at a position 17 remote from and displaceable with reference to the connecting unit 8, is connected through flexible pulling means 18, such as a cable or strap, with the sideways extending releasable and connectable link 11, 12 of said connecting unit 8. In this arrangement it is made sure that said position 17 rests against the load 2.

After completing all the saddles 13 in the aforementioned manner for support of the entire load 2', the telescopic arms 16 of the connecting units 8 in the first and second series 9, 10 of platforms are energized and extended to the position marked in figure 2 with reference 16' so as to lift the load from position 2 resting on the ground to the lifted position indicated with reference 2'. Due to the fact that during lifting of the load 2 the position 17 of the telescopically extendable arm 16, 16' remote from and displaceable with reference to the connecting unit 8 is arranged to rest against the load 2, 2', equilibrium of forces acting between the assembly 1 of the invention and the load 2, 2' is secured. Comparing the orientation occupied by the extended arm 16' with the orientation occupied by the non-extended arm 16, makes clear that the telescopic arms 16 are arranged to slide in the direction of the center of their connecting units 8 during extending said telescopic arms 16 for lifting the load 2.

Although the invention has been discussed in the foregoing with reference to an exemplary embodiment of the method and assembly of the invention, the invention is not restricted to this particular embodiment which can be varied in many ways without departing from the gist of the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment. Clearly from the foregoing it is evident that the invention is also embodied in a separate connecting unit which can be used to assemble a series of platforms as discussed herein.

## Claims

1. Assembly (1) for transport of heavy loads (2, 2'), comprising at least one series (9, 10) of platforms (3, 4, 5, 6) provided with wheels (7), and inter-positioned connecting units (8) for connecting the platforms with each other, **characterized in that** there are two adjacent series (9, 10) of platforms (3, 4, 5, 6) with wheels (7) and inter-positioned connecting units (8) for connecting the platforms, wherein each couple of two connecting units (8) that are neighboring to each other and are part of different ones of the two adjacent series (9, 10) of platforms, are provided with sideways extending releasable and connectable links (11, 12) for connecting said two connecting units (8) to each other.

2. Assembly (1) according to claim 1, **characterized in that** the releasable and connectable links (11, 12) comprise a left saddle portion (11') and a right saddle portion (12') that are arranged to be assembled together so as to provide a complete saddle (13) capable to support at least part of a load (2, 2'), wherein the left saddle portion (11') is part of a connecting unit (8) of a first series (9) of platforms (3, 4, 5, 6) and the right saddle portion (12') is part of a connecting unit (8) of a second series (10) of platforms (3, 4, 5, 6) adjacent to said first series (9) of platforms.

3. Assembly (1) according to claim 1 or 2, **characterized in that** each connecting unit (8) comprises a frame (14) that is provided with a spine beam (15) extending through said frame (14), and that at its opposite ends is connectable to a leading platform and a trailing platform with reference to said frame (14).

4. Assembly (1) according to any one of the previous claims 1 - 3, **characterized in that** each sideways extending releasable and connectable link (11, 12) of a connecting unit (8) is connected or connectable with a frame (14) of said connecting unit (8) that is positioned between a leading platform and a trailing platform with reference to said frame (14).

5. Assembly (1) according to claim 4, **characterized in that** the releasable and connectable links (11, 12) are connected with the frames (14) of the connecting units (8) through triangular subframes (21), each such subframe (21) having its base (21') connected to a frame (14) of a connecting unit (8) and its top angle (21") connected to a saddle portion (11', 12') of a connectable link (11, 12).

6. Assembly (1) according to any one of the previous claims 1 - 5, **characterized in that** each connecting unit (8) supports a telescopically extendable arm (16, 16') which at a position (17) remote from and displaceable with reference to the connecting unit (8') is connected with the releasable and connectable link (11, 12) of said connecting unit through pulling means, such as a cable or strap (18).

7. Assembly (1) according to claim 6, **characterized in that** the position (17) of the telescopically extendable arm (16, 16') remote from and displaceable with reference to the connecting unit (8) is arranged to rest during use against the load (2, 2').

8. Assembly (1) according to claim 6 or 7, **characterized in that** the telescopically extendable arm (16, 16') is mounted on a shoe (19) that is slidably received in a slide (20) of the connecting unit (8).

9. Connecting unit (8) for connection of platforms (3, 4, 5, 6) that are provided with wheels (7), **characterized in that** it has a sideways extending link (11, 12) that is arranged for establishing a releasable connection with a complementary shaped sideways extending link of another connecting unit.

10. Connecting unit (8) according to claim 9, **characterized in that** said link (11, 12) comprises one of a left saddle portion (11') and a right saddle portion (12'), wherein said left saddle portion (11') and right saddle portion (12') are attuned to be assembled so as to provide a complete saddle (13) capable to support at least part of a load (2, 2').

11. Connecting unit (8) according to claim 9 or 10, **characterized in that** it comprises a frame (14) that is provided with a spine beam (15) throughout said frame (14) which at its opposite ends is connectable to a leading platform and a trailing platform with reference to said frame (14).

12. Connecting unit (8) according to any one of the previous claims 9 - 11, **characterized in that** each sideways extending link (11, 12) is connected with a frame (14) of said connecting unit (8) that is positionable between a leading platform and a trailing platform with reference to said frame (14).

13. Connecting unit (8) according to claim 12, **characterized in that** the link (11, 12) is connected with the frame (14) of the connecting unit (8) through a triangular subframe (21), which subframe has its base (21') connected to said frame (14) of the connecting unit (8) and its top angle (21") connected to a saddle portion (11', 12') of said link (11, 12).

14. Connecting unit (8) according to any one of the previous claims 9 - 13, **characterized in that** it supports a telescopically extendable arm (16, 16'), wherein at a position (17) remote from and displaceable with reference to the connecting unit (8) said arm (16, 16') is connected through pulling means (18), such as a cable or strap, with the link (11, 12) of said connecting unit (8).

15. Connecting unit (8) according to claim 14, **characterized in that** the position (17) of the telescopically extendable arm (16, 16') remote from and displaceable with reference to the connecting unit (8) is arranged to rest during use against the load (2, 2').

16. Connecting unit (8) according to claim 14 or 15, **characterized in that** the telescopically extendable arm (16, 16') is mounted on a shoe (19) that is slidably received in a slide (20) of the connecting unit (8).

17. Method for transport of heavy loads (2, 2'), using at least one series of platforms (3, 4, 5, 6) provided with wheels (7), and inter-positioned connecting units (8) for connecting the platforms (3, 4, 5, 6) with each other, **characterized in that** two adjacent series (9, 10) of platforms (3, 4, 5, 6) are employed, wherein each series of platforms has wheels (7) and inter-positioned connecting units (8) provided with sideways extending releasable and connectable links (11, 12), wherein a first series (9) of platforms is positioned at a first side of the heavy load (2, 2') and the second series (10) of platforms is positioned at a second side of the heavy load (2, 2') opposite to said first side, whereafter each couple of two connecting units (8) that are next to each other and are part of different ones of the two series (9, 10) of platforms, are connected to each other by connecting their respective sideways extending releasable and connectable links (11, 12) underneath the load (2, 2').

18. Method according to claim 17, **characterized in that** said releasable and connectable links (11, 12) are provided with a left saddle portion (11') forming part of a connecting unit (8) of a first series of platforms and a right saddle portion (12') forming part of a connecting unit (8) of a second series of platforms adjacent to said first series of platforms, and that said left saddle portion (11') and right saddle portion (12') are joined so as to provide a complete saddle (13) for support of at least part of the load (2, 2').

19. Method according to claim 17 or 18, **characterized in that** each connecting unit (8) is provided with a telescopically extendable arm (16, 16') which at a position (17) remote from and displaceable with reference to the connecting unit (8) is connected through pulling means (18), such as a cable or strap, with the sideways extending releasable and connectable link (11, 12) of said connecting unit (8), and that after completing the saddle (13) for support of at least part of the load (2, 2') the telescopic arms (16, 16') of the connecting units (8) in the first and second series (9, 10) of platforms (3, 4, 5, 6) are extended to lift the load (2, 2').

20. Method according to claim 19, **characterized in that** the telescopic arms (16, 16') are arranged to slide in the direction of the center of their connecting units (8) during extending said telescopic arms (16, 16') for lifting the load (2, 2').

21. Method according to claim 19 or 20, **characterized in that** the position (17) of the telescopically extendable arm (16, 16') remote from and displaceable with reference to the connecting unit (8) is provided to rest against the load (2, 2').
